# EUROPEAN PATENT APPLICATION

(11) **EP 4 378 743 A1**
(43) Date of publication of application: **05.06.2024**
(21) Application number: 22210453.1
(22) Date of filing: 30.11.2022
(51) Int. Cl.: B60L 50/64, B60L 58/19, B60L 58/21, B60L 58/22

(54) **BATTERY SYSTEM, RANGE OF ELECTRIC VEHICLES AND USE OF A BATTERY SYSTEM**

(71) Applicant: Volvo Construction Equipment AB, 631 85 Eskilstuna (SE)
(72) Inventor: NEDJIMI, Ahcene, 69003 LYON (FR)
(74) Representative: Lavoix

(57) **Abstract**

A lithium ion battery system (5) presenting a plurality of configurations in which elementary battery modules (6) are arranged respectively in different configurations with different voltages and energy capacities, each configuration matching with at least one electric requirement of a range of electric vehicles, the elementary battery modules (6) of each configuration being arranged in a string number of strings (7) connected in parallel to each other, each string (7) comprising a module number of elementary battery modules (6), the configuration having a configuration voltage and a configuration energy capacity,
wherein each string (7) further includes a first electronic control unit for balancing a state of charge of each elementary battery module (6) within said string (7), and wherein the battery system (5) further includes at least one second electronic control unit for balancing a state of charge of the strings (7) relative to each other,
wherein each elementary battery module (6) includes a Battery Management Unit (BMU) to supervise and monitor the elementary battery module (6).

## Description

### Technical Field

This disclosure pertains to the field of electro-mobility.

This disclosure specifically relates to a battery system, a range of electric vehicles comprising such battery system and a use of such battery system.

### Background Art

Electro-mobility, including electrification of vehicles, plays an important role on the way towards a carbon neutral society.

Electro-mobility is changing vehicles not only in the automotive and commercial industries but also in construction industry. In this respect, the applicant intends to launch an electric range of compact wheel loaders and compact excavators in replacement of at least a part of diesel engine ones.

In electro-mobility, a battery system as energy source is a key technology. The battery system, also known as Energy Storage System (ESS) includes a battery pack which itself comprises one or more battery modules, generally of lithium ion type. A battery module is composed of a plurality of battery cells, e.g. 2V cells.

A battery module with voltage of 48 V is largely adopted to mild hybrid vehicle for low voltage implementations, usually defined in the automotive or commercial industries as applications requiring voltages lower than 30 V AC or lower than 60 V DC. For high voltage implementations, usually defined in the automotive or commercial industries as applications requiring voltages between 60 V DC and 1500 V DC or between 30 V AC rms and 1000 V AC rms, battery modules with voltage of 400 V are implemented for hybrid technology of passenger vehicles while battery modules with voltage like 600 V and 850 V are implemented for commercial vehicles, such as buses or trucks. These voltages lie within the voltage class B.

Since construction machines of the construction industry are now shifting to electric, a known strategy consists in reusing existing technologies of energy source from automotive or commercial industries. This would imply using a battery module with a low voltage of 48 V for low voltage implementations and a battery module with a high voltage of 400 V and 600 V would be used for high voltage implementations, such as off-road implementations.

However, this strategy presents some limits. Indeed, the battery modules are configured, both in shape and energy capacities, based on the automotive or commercial applications. This becomes a problem when it has to be dealt with various models of construction machines like compact wheel loaders and compact excavators which have each their own construction and electric requirements that differ from each other and from that of the automotive and commercial industries. Mechanical integration and electric requirements do not necessarily match with the standard 400V or 600V battery module solution.

### Summary

This disclosure improves the situation.

It is proposed a lithium ion battery system to power up a range of electric vehicles each having an electric requirement chosen at least between a voltage requirement and an energy capacity requirement, the battery system comprising a plurality of elementary battery modules, each elementary battery module comprising a plurality of battery cells, wherein each elementary battery module has a nominal voltage Ve and a nominal energy capacity Ee, wherein the battery system presents a plurality of configurations in which the elementary battery modules are arranged respectively in different configurations with different voltages and energy capacities, each configuration matching with at least one of the electric requirements of the range of electric vehicles, each configuration comprising a number Mc of elementary battery modules, the elementary battery modules of each configuration being arranged in a string number Ns of strings connected in parallel to each other, each string comprising a module number Nm of elementary battery modules, the string number Ns and the module number Nm being such that Ns ≥ 2, Nm ≥ 2 and Ns × Nm = Mc, the configuration having a configuration voltage Vc such that Vc = Nm × Ve and a configuration energy capacity Ec such that Ec = Mc × Ee, wherein each string further includes a first electronic control unit for balancing a state of charge of each elementary battery module within said string, and wherein the battery system further includes at least one second electronic control unit for balancing a state of charge of the strings relative to each other.

The disclosure proposes a modular architecture of the battery system relying on a single kind of elementary battery module used as a base in a scalable elementary battery module solution.

Furthermore, each elementary battery module includes a Battery Management Unit (BMU) to supervise and monitor the elementary battery module such as cells monitoring, cells balancing, state of charge, state of health, safety functions, controls of power connection and disconnection, diagnostics.

Thus, each elementary battery module comprises its own BMU and can work independently of the other elementary battery modules as it includes the same hardware as the other elementary battery modules.

Each elementary battery module may further include a fuse for electrical protection such as short circuit, overload. In such case, each elementary battery module comprises its own fuse for electrical protection.

Each elementary battery module may include a pressure vent for gas release, for example in case of thermal runway. In this case, each elementary battery module comprises its own pressure vent for gas release.

Each elementary battery module may include one or two contactors for the power connection and disconnection of the battery module, i.e. one contactor for the plus pole and an additional contactor for the minus pole which may be added.

Each elementary battery module may include a precharge circuit and a current sensor. In that case, each elementary battery module comprises its own precharge circuit and a current sensor.

Each elementary battery module may contain a High Voltage Interlock loop, a mechanism used to detect tampering or opening of a connector.

When a certain voltage threshold is to be reached (usually high voltage), each elementary battery module may be equipped with an insolation monitoring system that is used to monitor the battery system offering effective protection against electric shock.

The disclosure consists in packing the identical elementary battery modules in parallel to reach a targeted energy capacity. In that configuration, the system voltage range is the same as the elementary module voltage range (e.g 48V nominal). To reach a targeted voltage (e.g 400V or 600V nominal), elementary battery modules may be stacked in series forming a string or a branch of modules. A string or branch is defined by the total number of modules stacked in series and this association of modules in series defines the string voltage.

Once the targeted voltage is reached, the strings may be stacked in parallel to increase the energy capacity of the battery system. In that case, the battery system may comprise an additional connection box for a better parallelization of the battery system. This offers a high level of modularity with series/parallel connection.

When at least two elementary battery modules are connected in parallel, at the startup of the system, one elementary battery module auto-declares itself as a master to manage the parallelization of the modules. This module is then seen as a master and is the main communication interface with the vehicle.

As the modules are the same, in order to have only one interlocutor with the machine's computer, for example to communicate the overall state of charge of the battery system, the temperature increase of the cells, voltage, current, etc.,one of the modules takes the role of master and the others of slaves. The modules communicate with each other through the internal CAN bus, for balancing, state of charge, temperature, etc. The vehicle's computer sees the whole as a whole through the master module.

Thanks to the disclosure, in case of emergency purpose, if one elementary battery module fails (e.g., because of internal module fault), the vehicle can still be in a limp home mode by disconnecting the failed elementary battery module. The vehicle will run with the remaining elementary battery modules, using less energy but sufficient to move to a safe area.

Thanks to the adaptability of the battery system, a large number of different configurations can be obtained without requiring substantial developments and the associated time and costs. Wide ranges of configuration voltages and configuration energy capacities at low cost can be rapidly obtained. In addition, within such wide ranges, configuration voltages and configuration energy capacities can easily be chosen to be compatible with operating voltages of different systems involved in the field of electric vehicles, such as DC-DC inverter or onboard charger of the electric vehicle or charging stations for charging the battery system.

The elementary battery module is chosen to present small dimensions, making it easier to integrate the battery system in any available space of the vehicle, possibly at separate locations. The battery system of the invention offers an enhanced adaptability enabling to meet not only the different electric requirements of the range of electric vehicles but also the different available spaces of this range of electric vehicle. For better versatility, the elementary battery module can be mounted in various positions (e.g horizontal or vertical).

The battery system may comprise passive or active cooling system, notably air-cooled system or liquid cooled. Thanks to the presence of optional cooling inlets and circuit, the elementary battery module may be used with active thermal management to increase the battery lifetime. The vehicle may comprise an Energy Storage System comprising the whole battery system, i.e. the modules, the cells, the cooling system, the battery management unit, contactors, fuses, preload circuit.

In another aspect, it is proposed a range of battery systems, each battery system being according to the above, comprising at least two different configurations each matching with at least one of the electric requirements of different electric vehicles. The configurations may match with electric requirements of a construction machine chosen among an excavator and a wheel loader.

In such a case, the electric requirements of the electric vehicle are advantageously a voltage requirement ≥ 60V.

It is to be noted that the choice of the configuration of the battery system may be influenced by the specific electric requirements of the construction machine which has to be moved itself and which work tool has also to be moved, these movements being to be sometimes simultaneous. Indeed, the battery system is used for both types of movement. In other words, the battery system being used not only for moving the construction machine but also for moving the work tool thereof, the electric requirements are adapted to fulfill both uses, even simultaneously.

In another aspect, it is proposed a range of electric vehicles comprising a battery system as defined previously, wherein each electric vehicle has an electric requirement chosen at least between a voltage requirement and an energy capacity requirement, wherein the battery system presents a plurality of configurations each matching with at least one of the electric requirements of the range of electric vehicles.

The electric vehicles may be construction machines, such as excavators and wheel loaders, the voltage requirements of said construction machines being chosen between 500 V and 750 V and the energy capacity requirements of said construction machines being chosen between 30 kWh and 150 kWh

In another aspect, it is proposed a use of a battery system as defined previously to power up a range of electric vehicles each having an electric requirement chosen at least between a voltage requirement and an energy capacity requirement, comprising:
- determining the electric requirement of at least one of the electric vehicles,
- choosing one of the plurality of configurations matching with the electric requirement of said electric vehicle, said configuration comprising a configuration number Mc of elementary battery modules, the elementary battery modules of said configuration being arranged in a string number Ns of strings connected in parallel to each other, each string comprising a module number Nm of elementary battery modules, the string number Ns and the module number Nm being such that Ns ≥ 2, Nm ≥ 2 and Ns × Nm = Mc, the configuration having a configuration voltage Vc such that Vc = Nm × Ve and a configuration energy capacity Ec such that Ec = Mc × Ee.

The electric requirement may be at least one of a targeted voltage and a targeted energy capacity. The step of choosing one of the plurality of configurations may consist in :
- determining a number of elementary battery modules to be stacked in series forming a string, or a branch, of modules so as to reach the targeted voltage and
- determining a number of strings to be stacked in parallel to increase the energy capacity of the battery system and reach the targeted energy capacity.

In that case, the use may also comprise adding an additional connection box for improving a parallelization of the battery system. This offers a high level of modularity with series/parallel connection.

The use may further comprise:
- determining available space within the electric vehicle,
- arranging the elementary battery modules according to the available space.

### Brief Description of Drawings

Other features, details and advantages will be shown in the following detailed description and on the figures, on which:
Figure 1 is a partial representation in perspective of an electric vehicle implementing a battery system according to an embodiment of the invention, the electric vehicle being a construction machine of the construction industry belonging to a range of electric vehicles having each an electric requirement chosen at least between a voltage requirement and an energy capacity requirement.
Figure 2 is a schematic representation of the battery system of the electric vehicle of figure 1, the battery system having a configuration of identical elementary battery modules matching with the electric requirements of the electric vehicle, the configuration comprising Ns strings connected in parallel to each other, each string comprising Nm elementary battery modules connected in series with a first electronic control unit, the first electronic control unit being connected to a second electronic control unit.
Figure 3 is a schematic representation of another example of an elementary battery module that can be used in the battery system of figure 2.
Figure 4 is a flowchart illustrating a use of use of the battery system of figure 2.

### Description of Embodiments

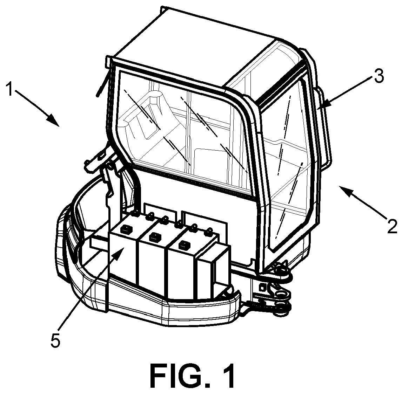

Figure 1 represents a portion of an electric vehicle according to an embodiment of the invention. The electric vehicle belongs to a range of electric vehicles having each an electric requirement chosen at least between a voltage requirement and an energy capacity requirement.

In the represented embodiment, the electric vehicle is a construction machine 1 of the construction industry. More specifically, figure 1 illustrates an upper portion 2, including a cabin 3, of a compact wheel loader or compact excavator. The electric vehicle could however be any other electric vehicle belonging to a range of electric vehicles, possibly of the automotive or commercial industries, such as a passenger car, a truck, a bus or other.

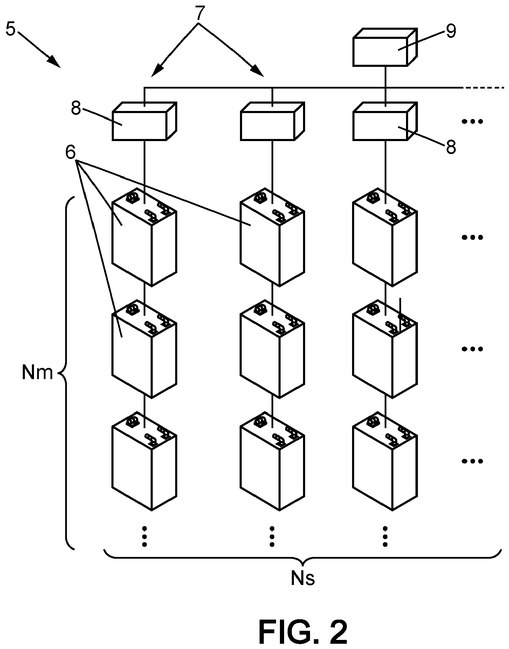

Such range of construction machines 1 has voltage requirements ranging from 500 V to 750 V, and energy capacity requirements ranging from 30 kWh to 150 kWh. To meet such voltage and/or energy capacity requirements, a battery system 5 (also known as "Energy Storage System (ESS)" or "Electrical Storage System") as shown in figure 2 is implemented.

The battery system or ESS 5 comprises several elementary battery modules 6. The elementary battery modules 6 are identical and hence have same dimensions and same number of battery cells providing a same nominal voltage Ve and a same nominal energy capacity Ee.

As represented on figure 2, the elementary battery modules 6 are arranged in one of a plurality of configurations in which the elementary battery modules 6 are connected in series in respective strings 7, which strings 7 are connected in parallel to each other.

Each configuration comprises an arrangement of elementary battery modules 6 to have a configuration voltage Vc and a configuration energy capacity Ec which match at least one of the electric requirement chosen between voltage and energy capacity requirements of at least one of the construction machine of the range of construction machines. In particular, each configuration comprises a number Mc of elementary battery modules 6, a string number Ns of strings 7 connected in parallel to each other and a module number Nm of elementary battery modules 6 per string 7, such that Ns ≥ 2, Nm ≥ 2 and Ns × Nm = Mc. Hence, the configuration voltage is Vc = Nm × Ve and the configuration energy capacity is Ec = Mc × Ee.

Each string 7 further includes a first electronic control unit (ECU) included in a main power box 8 for balancing a state of charge of each elementary battery module 6 within this string 7. The configuration is completed with one or several second electronic control units for balancing a state of charge of the strings 7 relative to each other. Balancing the state of charge within each string 7 or between the strings 7 can be done actively, the elementary battery modules 6 being connected and under charge, or passively, the elementary battery modules 6 being disconnected.

The second electronic control unit is part of a control box 9 made with a master battery management unit that drives all the elementary battery modules 6 acting as "slaves" with respect to elementary battery modules 6 balancing, connection and disconnection. The control box 9 may also include a pre-charge function for the whole battery system 5 in addition to contactors and related fuses. The control box 9 acts as a main interface between the strings 7 of elementary battery modules 6 and the construction machine 1. When overall configuration voltage is above 60 V, the control box 9 may also have a safety function as a high voltage interlock loop.

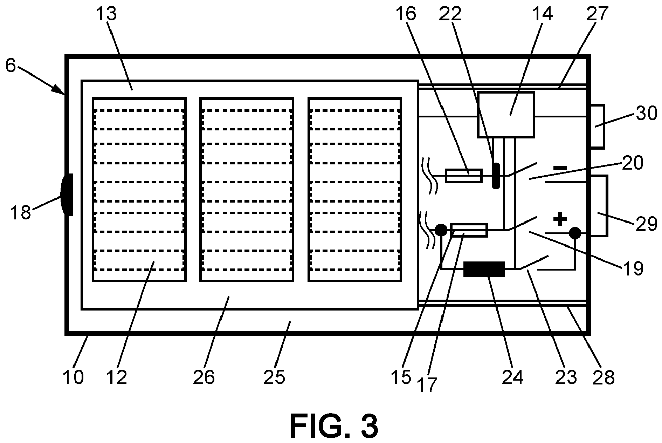

In the example shown in figure 3, each elementary battery module 6 that is to be used in the battery system 5 comprises a casing 10. Each battery module comprises a plurality of cells 12 arranged in cells modules 13. The elementary battery module 6 includes its own Battery Management Unit (BMU) 14 to supervise and monitor the elementary battery module 6 such as cells monitoring, cells balancing, state of charge, state of health, safety functions, controls of power connection and disconnection, diagnostics.

Each elementary battery module 6 also includes its own fuse 15 for electrical protection such as short circuit, overload, the fuse 15 having a fuse minus side 16 and a fuse plus side 17.

Each elementary battery module 6 further includes its own pressure vent 18 for gas release, for example in case of thermal runway. The pressure vent 18 is in the casing 10.

In this example, each elementary battery module 6 includes two contactors 19 and 20 for the power connection and disconnection of the elementary battery module 6, one contactor 19 for the plus pole and an additional contactor 20 for the minus pole.

Each elementary battery module 6 also includes a precharge circuit 21 and a current sensor 22, the precharge circuit 21 having a precharge contactor 23 and a precharge resistor 24.

The elementary battery module 6 comprises in this example a cooling system 25, such as an air-cooled system comprising a cooling circuit 26, a cooling pipe in 27 and a cooling pipe out 28.

A power connector or connectors 29 is/are present on the casing 10. A signal connector 30 is also present on the casing 10.

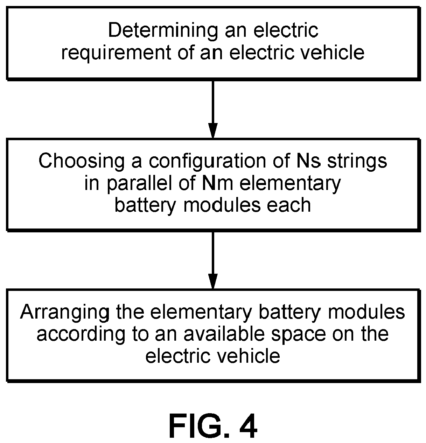

In relation with figure 4, a use of the battery system 5 is now disclosed. The following description is made in relation with the battery system 5 used to power up the range of construction machines 1 as discussed previously. This description is however transposable to any range of electric vehicles of other kind, especially to any range of electric vehicles of the automotive or commercial industries.

At first, the electric requirement of at least one of the construction machines 1 is determined. The electric requirement may be the voltage requirement and/or the energy capacity requirement or any other requirement in relation with the electric operation of the construction machine 1.

Then, for each construction machine 1 of the range, one of the plurality of configurations matching with the electric requirement of the construction machine is chosen. In particular, the number Mc as well as the module number Nm and the string number Ns are chosen to reach the configuration voltage Vc = Nm × Ve and the configuration energy capacity Ec = Mc × Ee matching the corresponding electric requirement of the construction machine 1.

More precisely, the step of choosing one of the plurality of configurations may consist in determining a number of elementary battery modules 6 to be stacked in series forming a string 7 of modules so as to reach the targeted voltage and then determining a number of strings to be stacked in parallel to increase the energy capacity of the battery system and reach the targeted energy capacity.

In an example provided for a purely illustrative and non-limitative purpose, the steps previously disclosed can be implemented with elementary battery modules 6 having each a nominal voltage Ve of 48 V and a nominal energy capacity Ee of 5 kWh. Then according to the targeted energy capacity, the elementary battery modules 6 are packed:
- in series which will lead to the strings of a certain voltage: for example, 10 elementary battery modules 6 in series will result in a string 7 having a voltage of 480 V and an energy capacity of 50 kWh, and
- in parallel to extend the energy capacity and meet the targeted energy capacity: for example, 2 strings 7 of 10 elementary battery modules 6 will result in a configuration voltage of 480 V and a configuration energy capacity of 100 kWh

The module number Nm of elementary battery modules 6 per string 7 and the string number of strings 7 may also depend on the control box 9 ability to manage the number of elementary battery modules 6. For example, with the elementary battery module 6 having the nominal voltage Ve of 48 V and the nominal energy capacity Ee of 5 kWh, the module number Nm may be up to 15, totalizing up to 75 kWh for the energy capacity of each string and 720 V for the voltage of each string, and the string number Ns may be up to 10 totalizing up to 750Kwh for the configuration energy capacity and 720V for the configuration voltage.

Still for a purely illustrative and non-limitative purpose, in the table below, the configurations with elementary battery modules 6 having each the nominal voltage Ve of 48 V and the nominal energy capacity Ee of 5 kWh are provided for four construction machines 1 having different voltage and energy capacity requirements.

**Table**

| Construction machine | 1 | 2 | 3 | 4 |
|---|---|---|---|---|
| Energy capacity required for 4h autonomy (kWh) | 64.6 | 90.8 | 86.0 | 110,0 |
| Configuration (s= modules in series, p= strings in parallel, MB = main power box including the first ECU) | [8s2p] + 2 MB 65,6 kWh, 408 V | [11s2p] + 2 MB 90 kWh, 562 V | [11s2p] + 2 MB 90 kWh,5 62 V | [13s2p] + 2 MB 106,6 kWh, 664 V |

Another step may be included that consists in adding an additional connection box for improving a parallelization of the battery system. This offers a high level of modularity with series/parallel connection.

As shown in figure 1, once the configuration has been set, the available space within the construction machine 1 can be determined and the elementary battery modules 6 can be arranged according to the available space, being possibly dispatched at separate locations and connected to each other by wires.

## Claims

1. A lithium ion battery system (5) to power up a range of electric vehicles each having an electric requirement chosen at least between a voltage requirement and an energy capacity requirement, the battery system (5) comprising a plurality of elementary battery modules (6), each elementary battery module (6) comprising a plurality of battery cells, wherein each elementary battery module (6) has a nominal voltage Ve and a nominal energy capacity Ee, wherein the battery system (5) presents a plurality of configurations in which the elementary battery modules (6) are arranged respectively in different configurations with different voltages and energy capacities, each configuration matching with at least one of the electric requirements of the range of electric vehicles, each configuration comprising a number Mc of elementary battery modules (6), the elementary battery modules (6) of each configuration being arranged in a string number Ns of strings (7) connected in parallel to each other, each string (7) comprising a module number Nm of elementary battery modules (6), the string number Ns and the module number Nm being such that Ns ≥ 2, Nm ≥ 2 and Ns × Nm = Mc, the configuration having a configuration voltage Vc such that Vc = Nm × Ve and a configuration energy capacity Ec such that Ec = Mc × Ee, wherein each string (7) further includes a first electronic control unit for balancing a state of charge of each elementary battery module (6) within said string (7), and wherein the battery system (5) further includes at least one second electronic control unit for balancing a state of charge of the strings (7) relative to each other, each elementary battery module (6) including a Battery Management Unit (BMU) to supervise and monitor the elementary battery module (6).

2. Battery system according to claim 1, each elementary battery module (6) including a fuse for electrical protection.

3. Battery system according to claim 1 or 2, each elementary battery module (6) including a pressure vent for gas release.

4. Battery system according to any preceding claim, each elementary battery module (6) including one ortwo contactors for the power connection and disconnection of the elementary battery module.

5. Battery system according to any preceding claim, each elementary battery module (6) including a precharge circuit and a current sensor.

6. Range of battery systems (5), each battery system being according to any preceding claim, comprising at least two different configurations each matching with at least one of the electric requirements of different electric vehicles.

7. Range of battery systems (5) according to claim 6, wherein the configurations match with electric requirements of a construction machine chosen among an excavator and a wheel loader.

8. Range of battery systems (5) according to claim 6 or 7, wherein the electric requirements of the electric vehicle are a voltage requirement ≥ 60V.

9. Range of electric vehicles comprising a battery system (5) according to any of claims 1 to 5, wherein each electric vehicle has an electric requirement chosen at least between a voltage requirement and an energy capacity requirement, wherein the battery system (5) presents a plurality of configurations each matching with at least one of the electric requirements of the range of electric vehicles.

10. Range of electric vehicles according to claim 9, wherein the electric vehicles are construction machines (1), such as excavators and wheel loaders, the voltage requirements of said construction machines (1) being chosen between 500 V and 750 V and the energy capacity requirements of said construction machines (1) being chosen between 30 kWh and 150 kWh

11. Use of a battery system (5) according to any of claims 1 to 5 to power up a range of electric vehicles each having an electric requirement chosen at least between a voltage requirement and an energy capacity requirement, comprising:
- determining the electric requirement of at least one of the electric vehicles,
- choosing one of the plurality of configurations matching with the electric requirement of said electric vehicle, said configuration comprising a configuration number Mc of elementary battery modules (6), the elementary battery modules (6) of said configuration being arranged in a string number Ns of strings (7) connected in parallel to each other, each string (7) comprising a module number Nm of elementary battery modules (6), the string number Ns and the module number Nm being such that Ns ≥ 2, Nm ≥ 2 and Ns × Nm = Mc, the configuration having a configuration voltage Vc such that Vc = Nm × Ve and a configuration energy capacity Ec such that Ec = Mc × Ee.

12. Use of a battery system (5) according to claim 11, wherein the step of choosing one of the plurality of configurations consists in :
- determining a number of elementary battery modules (6) to be stacked in series forming a string (7) of modules so as to reach the targeted voltage and
- determining a number of strings (7) to be stacked in parallel to increase the energy capacity of the battery system (5) and reach the targeted energy capacity.

13. Use of a battery system (5) according to the preceding claim, comprising adding an additional connection box for improving a parallelization of the battery system (5).

14. Use of a battery system (5) according to any of claims 11 to 13, further comprising:
- determining available space within the electric vehicle,
- arranging the elementary battery modules (6) according to the available space.
